Europäisches Patentamt

(19) **European Patent Office**

**Office européen des brevets**

(11) Numéro de publication: **0 067 774**
**A1**

(12) # DEMANDE DE BREVET EUROPEEN

(21) Numéro de dépôt: **82401073.0**

(22) Date de dépôt: **14.06.82**

(51) Int. Cl.³: **A 01 D 78/10**
**F 16 H 9/04, A 01 D 69/00**

---

(30) Priorité: **15.06.81 DK 2617/81**

(43) Date de publication de la demande:
**22.12.82 Bulletin 82/51**

(84) Etats contractants désignés:
**AT FR SE**

(71) Demandeur: **FARENDLOSE MASKINFABRIK A/S**
**No. 54 Farendlosevej**
**Farendlose 4100 Ringsted(DK)**

(72) Inventeur: **Hansen, Svend B.**
**no. 55 Farendlosevej Farendlose**
**DK-4100 Ringsted(DK)**

(74) Mandataire: **Fort, Jacques et al,**
**CABINET PLASSERAUD 84, rue d'Amsterdam**
**F-75009 Paris(FR)**

---

(54) **Râteau faneur à disques.**

(57) Dans un râteau faneur à disques qui peuvent être commandés chacun dans son sens de rotation à l'aide de deux poulies de transmission (3, 4) et une seule courroie de transmission (11) qui passe sur une poulie motrice (8), une poulie (13) de renvoi de la courroie est placée coaxilaement à la poulie de transmission (3) qui a le sens de rotation opposé, et des moyens d'accouplement, en liaison avec le disque attenant, permettent d'accoupler le disque soit avec la poulie de transmission (3) attenante, soit avec la poulie de renvoi (3). Ceci permet, par des moyens simples, de faire tourner l'un des disques dans un sens ou dans l'autre, au choix.

./...

FIG.1

Râteau faneur à disques

La présente invention concerne un râteau faneur à disques, comportant deux disques rotatifs autour d'axes essentiellement verticaux et porteurs de bras radiaux dotés de dents de fanage et des poulies de transmission par courroie conçues pour être commandées chacune dans son sens de rotation à l'aide d'une seule et même courroie depuis une poulie motrice et à l'aide d'au moins une poulie de renvoi.

On connait un tel râteau faneur à disques selon le brevet danois n° 137662.

Il est souvent souhaitable de pouvoir faire tourner les deux disques d'un râteau faneur dans le même sens de rotation, par exemple dans le cas où la couche à récolter est de faible épaisseur. Pour ce faire, il est connu de mettre en place un dispositif inverseur en liaison avec l'un des disques, ce qui cependant rend la construction notablement plus compliquée.

La présente invention a pour but de permettre, avec des moyens extrêmement simples, l'inversion du sens de rotation de l'un des disques d'un râteau faneur du genre mentionné en préambule.

Pour permettre ceci, le râteau faneur à disques selon l'invention est caractérisé par le fait que la poulie de renvoi est placée coaxialement avec l'une des poulies de transmission par courroie, que la courroie de commande est conduite de telle manière que la poulie de renvoi et la poulie de transmission qui lui est coaxiale tournent dans des sens opposés et que le râteau comprend des moyens pour accoupler le disque coaxial à poulie de renvoi soit à la poulie de renvoi, soit à la poulie de transmission qui lui est coaxiale. L'invention consiste en réalité à déplacer la poulie de renvoi que l'on trouve déjà sur les râteaux faneurs à disques connus jusqu'au disque qui tourne en sens inverse et à mettre en place des moyens d'accouplement par lesquels on peut accoupler le disque en question soit à la poulie de renvoi, soit à la poulie de transmission correspondante. Ceci est notablement plus simple que l'emploi connu d'un dispositif inverseur en liaison avec l'un des disques.

De plus, les moyens d'accouplement peuvent être extrèmement simples, car ils peuvent par exemple être constitués par un organe d'accouplement placé, de façon non rotative, sur le moyeu du disque coaxial à la poulie de renvoi et déplaçable en direction verticale pour accouplement soit avec la poulie de renvoi, soit avec la poulie de transmission qui lui est coaxiale.

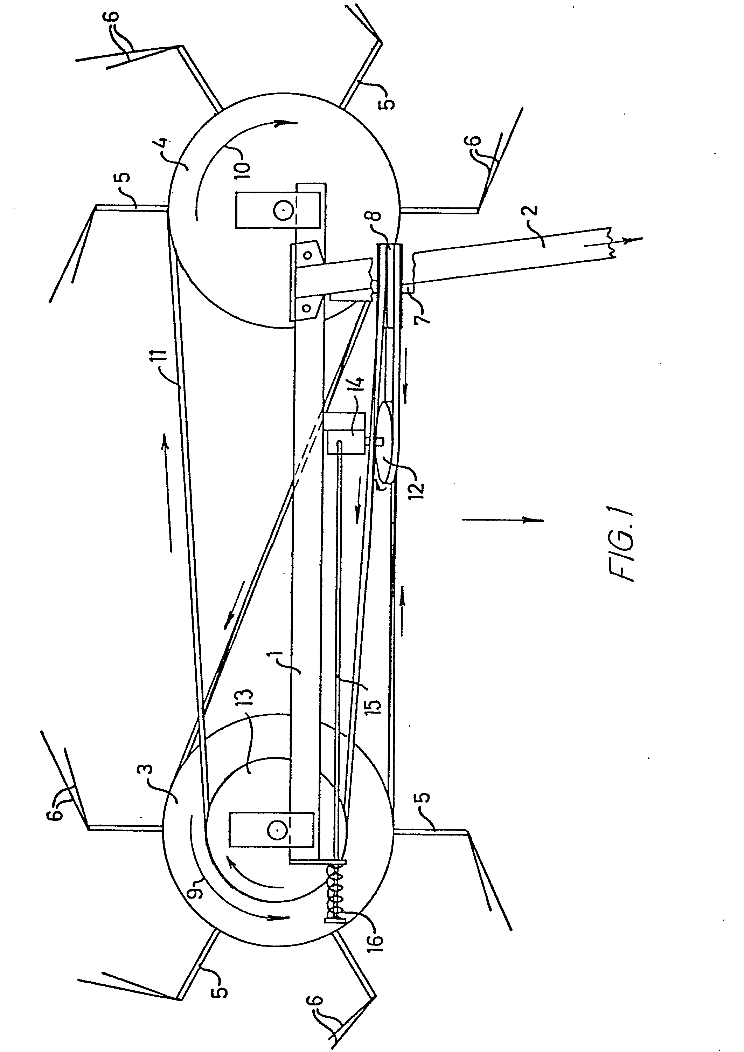

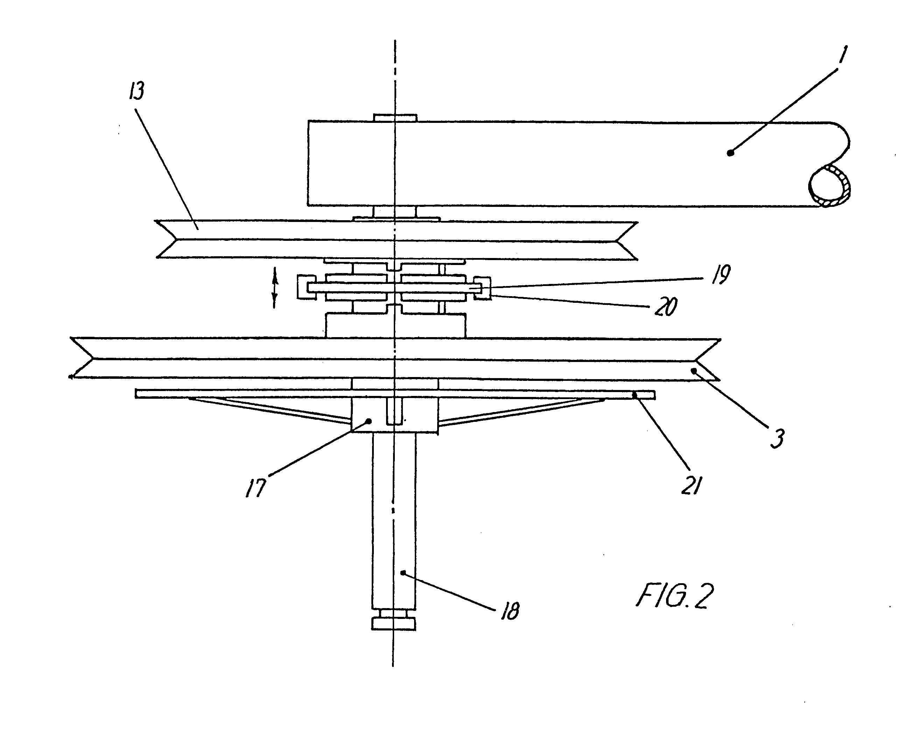

L'invention sera mieux comprise à l'aide du complément de description ci-après en regard du dessin annexé dans lequel la figure 1 est une vue en plan des parties du râteau faneur à disques nécessaire pour expliquer l'invention, la figure 2 montrant, vu de coté, un des disques et les poulies attenantes.

Le râteau faneur à disques représenté sur le dessin comprend un châssis de support 1 doté d'une barre d'attelage 2 dont l'extrémité libre, non représentée sur le dessin, est attelée à l'attelage trois points du tracteur.

A chacune des extrémités du châssis est monté un disque à poulies 3 et 4 de transmission par courroie, rotatives autour d'axes verticaux. Sur les disques sont montés des bras radiaux 5 équipés de dents de fanage 6 que le dessin, pour des raisons de clarté, ne montre qu'en partie.

Sous chacun des disques se trouve une roue, non représentée, de support du râteau au sol.

Le châssis porte, de plus, un arbre horizontal tournant 7 doté d'une double poulie de transmission par courroie 8 commandée par la prise de force du tracteur.

Comme on le voit sur la figure 1, les poulies de transmission 3 et 4 tournent dans des sens opposés 9 et 10 si bien que les dents de fanage 6 montées sur les disques rejettent ou râtissent la récolte en une rangée sous le milieu du râteau.

La courroie 11 de commande du râteau passe sur la

3

poulie de transmission 3 située à gauche de la figure 1 et de là - vue dans le sens de rotation - elle passe, par en dessous, dans la gorge la plus à l'extérieur de la poulie de commande 8 d'où elle revient sur une poulie de renvoi 12 logée sur le châssis de support 1, d'où elle passe, par en dessous, dans la gorge la plus à l'intérieur de la poulie de commande 8 d'où elle repart vers une poulie de renvoi 13 coaxiale à la poulie de transmission 3. La poulie de renvoi 12 est logée sur un support déplaçable 14 qui subit l'effort de traction d'une barre 15 et d'un ressort 16 pour agir sur la poulie de renvoi 12 et tendre la courroie. Partant de la poulie 13, la courroie passe sur la seconde poulie de transmission 4 de manière telle que celle-ci tourne en sens inverse de la première poulie de transmission 3 et elle revient ensuite, en croisant, vers la poulie de transmission 3.

Pour des raisons d'encombrement et de choix convenable de vitesse de rotation des poulies de transmission aux disques, la poulie de commande 8 a un diamètre relativement faible et, par conséquent, elle ne peut transmettre qu'un faible effort par gorge, mais du fait que la courroie passe deux fois sur ladite poulie de commande 8, l'effort de traction que l'on peut transmettre est pratiquement doublé par rapport à celui obtenu dans le râteau faneur de type connu mentionné plus haut où la courroie ne passe qu'une seule fois sur la poulie de commande.

Avec une mise en place convenable de la poulie de renvoi 12 et de la poulie de renvoi 13, la courroie 11 peut, entre deux passages sur la poulie de commande 8, passer sur l'une des poulies de transmission 3, 4, ce qui permet de réduire la tension de courroie pratiquement de moitié.

La figure 2 montre la poulie 3 de transmission au disque et la poulie de renvoi 13. Les deux poulies peuvent tourner librement sur un moyeu de disque 17 qui peut tourner librement sur un axe fixe 18 solidaire du

4.

châssis 1. Un organe d'accouplement 19 est relié au moyeu de disque 17 par l'intermédiaire d'un ensemble clavette-rainure permettant un mouvement en sens vertical. Une fourche d'embrayage 20 permet d'accoupler l'organe d'accouplement 19 avec la poulie de transmission 3 ou avec la poulie de renvoi 13. Comme on le voit sur la figure 1, les deux poulies tournent en sens inverses et il est donc possible de faire tourner le moyeu de disque 17, le disque attenant 21 et les bras radiaux 5 (non représentés sur la figure 2) avec les dents de fanage 6 dans un sens ou dans l'autre, au choix.

## REVENDICATIONS

1. Râteau faneur à disques, comportant deux disques rotatifs autour d'axes essentiellement verticaux et porteurs de bras radiaux (5) dotés de dents de fanage (6) et des poulies de transmission (3, 4) par courroie conçues pour être commandées chacune dans son sens de rotation à l'aide d'une seule et même courroie (11) depuis une poulie motrice (8) et à l'aide d'au moins une poulie de renvoi (13), caractérisé en ce que la poulie de renvoi (13) est placée coaxialement avec l'une des poulies de transmission par courroie (3), en ce que la courroie de commande (11) est conduite de telle manière que la poulie de renvoi (13) et la poulie de transmission (3) qui lui est coaxiale tournent dans des sens opposés et en ce que le râteau comprend des moyens pour accoupler le disque (21) coaxial à la poulie de renvoi soit à la poulie de renvoi (13), soit à la poulie de transmission (3) qui lui est coaxiale.

2. Râteau faneur selon la revendication 1, caractérisé en ce que les moyens d'accouplement sont constitués par un organe d'accouplement (19) placé, de façon non rotative, sur le moyeu (17) du disque coaxial à la poulie de renvoi (13) et déplaçable en direction verticale pour accouplement soit avec la poulie de renvoi (13), soit avec la poulie de transmission (3) qui lui est coaxiale

3. Râteau faneur à disques avec deux disques rotatifs autour d'axes essentiellement verticaux, essentiellement comme décrit ci-dessus en regard du dessin annexé.

*FIG.1*

1/2

0067774

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,Y | DK-A- 137 662  (CHRISTENSEN) <br> * En entier * | 1 | A 01 D    78/10 <br> F 16 H     9/04 <br> A 01 D    69/00 |
| Y | GB-A-1 285 021  (REINHOLD) <br> * Page 1, ligne 93 - page 2, ligne 32 * | 1,2 | |
| A | FR-A-2 426 192  (DUPORT) <br> * En entier * | 1,2 | |
| A | FR-A-2 199 925  (SIMPLICITY MANUFACTURING COMPANY) <br> * Page 3, ligne 26 - page 4, ligne 28 * | 1,2 | |
| A | FR-A-1 505 378  (REMY & FILS) <br> * Page 2, colonne de gauche, paragraphe 3 * | 1 | |
| A | FR-A-2 329 186  (FREUDENDAHL) | | |
| A | FR-A-2 409 687  (TEAGLE) | | |

DOMAINES TECHNIQUES
RECHERCHES (Int. Cl. ³)

A 01 D
F 16 H

Le présent rapport de recherche a été établi pour toutes les revendications

| Lieu de la recherche | Date d'achèvement de la recherche | Examinateur |
|---|---|---|
| LA HAYE | 15-09-1982 | DE LAMEILLIEURE D. |